# EUROPÄISCHE PATENTANMELDUNG

(11) **EP 4 815 361 A1**
(43) Veröffentlichungstag der Anmeldung: **30.09.2026**
(21) Anmeldenummer: 25166444.7
(22) Anmeldetag: 26.03.2025
(51) Int. Cl.: H04L 9/06, H04L 9/32, H04L 9/00

(54) **VERFAHREN ZUM VERIFIZIEREN DER HERKUNFT UND URSPRÜNGLICHKEIT VON REPRODUZIERBAREN DIGITALEN INFORMATIONSEINHEITEN**

(71) Anmelder: Secure Dimensions GmbH, 81377 München (DE)
(72) Erfinder: Matheus, Andreas, 81377 München (DE); Colaiacomo, Lucio, 00037 Segni (IT)
(74) Vertreter: Reich, Jochen

(57) **Zusammenfassung**

Die Erfindung betrifft ein System zur Verifizierung der Herkunft und Ursprünglichkeit von Informationseinheiten sowie deren kontrollierte Verarbeitung, unabhängig von deren Speicherung. Ein solches System ist insbesondere zur Informationssicherung bei Künstlicher Intelligenz sowie der Erstellung von Informationsprodukten, z.B. Entscheidungsvorlagen in digitaler Form, auf der Basis von reproduzierbaren digitalen Informationseinheiten nützlich, da es eine Verifizierung der Herkunft und Ursprünglichkeit nicht nur des Informationsproduktes, sondern auch der verwendeten reproduzierbare digitale Informationseinheiten selbst, unabhängig von deren Speicherung, ermöglicht.

## Beschreibung

Die Erfindung betrifft ein System zur Verifizierung der Herkunft und Ursprünglichkeit von Informationseinheiten sowie deren kontrollierte Verarbeitung, unabhängig von deren Speicherung. Ein solches System ist insbesondere zur Informationssicherung bei Künstlicher Intelligenz sowie der Erstellung von Informationsprodukten, z.B. Entscheidungsvorlagen in digitaler Form, auf der Basis von reproduzierbaren digitalen Informationseinheiten nützlich, da es eine Verifizierung der Herkunft und Ursprünglichkeit nicht nur des Informationsproduktes, sondern auch der verwendeten reproduzierbare digitale Informationseinheiten selbst, unabhängig von deren Speicherung, ermöglicht.

In der bekannten Informationsverarbeitung gewinnen Verfahren zur Herkunftsverifikation und zur vertrauenswürdigen Verarbeitung digitaler Daten zunehmend an Bedeutung. Besonders im Kontext von verteilten Systemen, maschinellen Lernverfahren oder datengetriebenen Entscheidungen besteht ein wachsender Bedarf an Mechanismen, die die Ursprünglichkeit von Daten nachweislich sichern sowie die Nutzung und Weiterverarbeitung kontrollierbar gestalten. Aus dem Stand der Technik sind hierfür unterschiedliche Lösungen bekannt, welche auf zentralisierten Prüfmechanismen, digitalen Signaturen oder der Einbettung von Herkunftskennungen basieren.

Beispielsweise ermöglichen klassische digitale Zertifikate die Signierung und Authentifizierung von Datenquellen, setzen jedoch in der Regel ein zentrales Vertrauen in eine ausstellende Instanz voraus. Ferner bieten kryptografisch gesicherte Prüfsummen (Hash-Werte) in Kombination mit Blockchain-Technologien eine Integritätsprüfung digitaler Inhalte, ermöglichen jedoch häufig keine flexible Verknüpfung mit unterschiedlichen Nutzungsrechten oder Verarbeitungsbedingungen. Ebenso ist es im Stand der Technik üblich, Metadaten gemeinsam mit den Daten selbst zu speichern oder lose zu verlinken, was insbesondere bei dezentralen Speicherarchitekturen und reproduzierbaren Informationseinheiten zu Zuverlässigkeitsproblemen führen kann.

Ein wesentlicher Nachteil bestehender Systeme besteht darin, dass die Kontrolle über die Verarbeitungsberechtigung einer digitalen Informationseinheit oft nicht dynamisch oder kontextabhängig erfolgt, sondern auf starren Rollen- oder Zugriffskonzepten beruht. Darüber hinaus ist die datenschutzkonforme Überprüfung sensibler Zertifikatsinformationen, beispielsweise unter Einsatz von Zero-Knowledge-Techniken, in bestehenden Infrastrukturen bislang nur eingeschränkt möglich oder mit erheblichem Implementierungsaufwand verbunden. Schließlich mangelt es bisherigen Ansätzen an einem durchgängig manipulationssicheren, konsensbasierten Modell zur gemeinsamen Verwaltung von Zertifikaten und zugehörigen Metadaten durch mehrere sich vertrauende Parteien.

Es ist daher eine Aufgabe der vorliegenden Erfindung, ein Verfahren vorzuschlagen, welches die Verifizierung der Herkunft und Ursprünglichkeit sowie die kontrollierte Verarbeitung von reproduzierbaren digitalen Informationseinheiten in verteilten Systemen ermöglicht, wobei sowohl die Integrität der Datenbasis als auch die Vertraulichkeit von Zertifikatsinformationen gewahrt bleibt und externe Systeme über strukturierte Schnittstellen in die Prüf- und Zertifizierungsprozesse integriert werden können. Ferner ist es eine Aufgabe der vorliegenden Erfindung, eine entsprechend eingerichtete Vorrichtung sowie eine Systemanordnung vorzuschlagen, die das beschriebene Verfahren technisch umsetzt und eine manipulationssichere, transparente sowie interoperable Infrastruktur für Herkunftsverifikation und Verarbeitungssteuerung bereitstellt. Ferner ist es eine Aufgabe der vorliegenden Erfindung, ein Computerprogrammprodukt mit Steuerbefehlen bereitzustellen, welche das Verfahren implementieren beziehungsweise die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zur Verifizierung der Herkunft und Ursprünglichkeit sowie zur kontrollierten Verarbeitung von reproduzierbaren digitalen Informationseinheiten vorgeschlagen, umfassend die Schritte Ermitteln eines Hash-Werts einer digitalen Informationseinheit durch Anwendung einer definierten Transformationsregel, die die Informationseinheit in eine einheitlich strukturierte und hash-berechenbare Darstellung überführt, Speichern des Hash-Werts und zugehöriger Metadaten in einem verteilten Rechensystem, wobei durch kryptografische Verfahren eine nachträgliche Veränderung der gespeicherten Daten verhindert wird, Festlegen eines Zertifikattyps mit einer oder mehreren Zertifikatsangaben, wobei die Festlegung dauerhaft im verteilten Rechensystem gespeichert wird, Verknüpfen eines ausgestellten Zertifikats mit dem Hash-Wert der digitalen Informationseinheit, und Prüfen der Herkunft, Ursprünglichkeit und Verarbeitungserlaubnis durch selektives Offenlegen einzelner Zertifikatsangaben gegenüber einem externen Prüfsystem, wobei ein kryptografisches Nachweisverfahren verwendet wird, das auf dem Prinzip basiert, dass der Nachweis der Gültigkeit einer bestimmten Information erfolgt, ohne deren tatsächlichen Inhalt preiszugeben, indem mathematisch überprüfbare Beweise erzeugt werden, die lediglich die Erfüllung der Prüfbedingungen bestätigen.

Gemäß einem weiteren Aspekt der vorliegenden Erfindung wird die Transformationsregel zur Ermittlung des Hash-Werts einer digitalen Informationseinheit nicht nur als technische Vorschrift zur Strukturvereinheitlichung verstanden, sondern darüber hinaus um eine dynamische Kontextanpassung erweitert, wobei die Transformationsregel in Abhängigkeit vom Datenformat, Verwendungszweck oder Verarbeitungskontext angepasst wird, bevor der Hash-Wert generiert wird. Dies hat den Vorteil, dass auch bei variierenden Ursprungsformaten eine eindeutige und vergleichbare Darstellung erzeugt wird, was die Nachvollziehbarkeit und Integrität der Herkunftsverifikation in heterogenen Datenumgebungen wesentlich erhöht.

Gemäß einem weiteren Aspekt der Erfindung wird das kryptografische Nachweisverfahren so erweitert, dass nicht nur die Gültigkeit einzelner Zertifikatsangaben nachgewiesen wird, ohne deren Inhalt offenzulegen, sondern dass zusätzlich ein mehrstufiges Prüfmodell implementiert wird, welches je nach Anforderung selektiv Beweisbestandteile für mehrere Zertifikatsattribute kombiniert, ohne dass die Prüfenden Zugang zu nicht relevanten Attributen erhalten. Dies hat den Vorteil, dass bei komplexen Prüfanforderungen, etwa in sicherheitskritischen oder datenschutzsensiblen Anwendungen, gezielt und granular geprüft werden kann, ohne unnötige Offenlegung oder Offenbarkeitsrisiken zu erzeugen.

Gemäß einem weiteren Aspekt der Erfindung wird die Verknüpfung eines ausgestellten Zertifikats mit dem Hash-Wert der digitalen Informationseinheit zusätzlich mit einem temporären Gültigkeitsintervall versehen, das im Zertifikat selbst kodiert ist und bei der Prüfung automatisch berücksichtigt wird. Dies hat den Vorteil, dass sowohl die Verfügbarkeit als auch die Integrität der Zertifizierungslogik dynamisch gesteuert werden kann, ohne dass eine externe Zertifikatsverwaltung erforderlich ist, was insbesondere für autonome, dezentrale Verarbeitungssysteme vorteilhaft ist.

Gemäß einem weiteren Aspekt der vorliegenden Erfindung wird das verteilte Rechensystem nicht nur zur Speicherung der Metadaten und Zertifikatstypen verwendet, sondern darüber hinaus um eine Protokollschicht erweitert, die eine versionsabhängige Historisierung aller Änderungen an Zertifikatdefinitionen und Metadaten ermöglicht. Dies hat den Vorteil, dass eine revisionssichere Rückverfolgbarkeit über sämtliche Zertifizierungsereignisse hinweg gewährleistet ist und sich potenzielle Konflikte oder Manipulationsversuche eindeutig rekonstruieren lassen.

Gemäß einem weiteren Aspekt der vorliegenden Erfindung umfasst die Programmschnittstelle zur Interaktion mit externen Systemen ein deklaratives Anfragemodell, das es ermöglicht, Verarbeitungsketten auf Basis von Zertifikatsattributen zu planen, zu initiieren oder zu blockieren. Dies hat den Vorteil, dass Systeme, welche automatisiert Entscheidungen oder Datenverarbeitung auf Grundlage zertifizierter Informationen durchführen, unmittelbar und nachvollziehbar prüfen können, ob eine beabsichtigte Verarbeitung im Einklang mit den definierten Zertifikatsbedingungen steht.

Gemäß einem weiteren Aspekt der Erfindung wird die Konsensbildung innerhalb des verteilten Rechensystems nicht nur für Speicheroperationen, sondern auch für die Zertifikatsausstellung selbst verwendet, sodass ein Zertifikat erst dann gültig wird, wenn eine vordefinierte Mindestanzahl von vertrauenswürdigen Instanzen die zugrundeliegenden Metadaten und Verarbeitungsregeln überprüft und freigegeben hat. Dies hat den Vorteil, dass ein robustes Vertrauensmodell realisiert wird, bei dem keine einzelne Instanz die alleinige Kontrolle über sicherheitsrelevante Zertifikatsentscheidungen besitzt.

Gemäß einem weiteren Aspekt der Erfindung wird bei der Zertifikatsstruktur ein modularer Aufbau verwendet, bei dem jedes Attribut mit eigenen Validierungsregeln und optionalen kryptografischen Belegen versehen wird. Dies hat den Vorteil, dass sich Zertifikate flexibel an unterschiedliche Anwendungskontexte anpassen lassen, ohne die Integrität der Gesamtstruktur zu gefährden oder neue Typdefinitionen erzeugen zu müssen.

Gemäß einem weiteren Aspekt der Erfindung erfolgt die Hash-Wert-Erzeugung für digitale Informationseinheiten unter Berücksichtigung von Umgebungsparametern, wie etwa dem Erstellungszeitpunkt, Herkunftsgerät oder Signatur des Ursprungsprozesses, wobei diese als nicht-beeinflussbare Kontextmerkmale in die Transformationsregel einfließen. Dies hat den Vorteil, dass sich auch bei formal identischen Dateninhalten unterschiedliche Herkunftsszenarien sicher voneinander abgrenzen lassen, was insbesondere bei wiederverwendeten Daten oder gleichartigen Dateigenerationen entscheidend ist.

Gemäß einem weiteren Aspekt der vorliegenden Erfindung wird das kryptografische Prüfsystem zur Validierung von Zertifikatsangaben in eine vertrauenswürdige Laufzeitumgebung eingebettet, die über abgesicherte Schnittstellen lediglich Bestätigungs- oder Ablehnungswerte ausgibt, ohne Rückschlüsse auf interne Parameter zuzulassen. Dies hat den Vorteil, dass auch unter Einsatz unsicherer Netzwerke oder Drittanbieter-Infrastrukturen ein hohes Schutzniveau für sensible Prüfprozesse gewährleistet ist, ohne dass auf zentrale Kontrollinstanzen zurückgegriffen werden muss.

Gemäß einem weiteren Aspekt der vorliegenden Erfindung werden die im Rechensystem gespeicherten Zertifikattypen nicht nur zur Strukturprüfung herangezogen, sondern dienen zugleich als Ausführungsvorlage für adaptive Prüfprozesse, bei denen externe Systeme automatisiert erkennen können, welche Prüfmechanismen oder Verarbeitungsfreigaben erforderlich sind. Dies hat den Vorteil, dass ein intelligentes, kontextsensitives Prüf- und Verarbeitungssystem geschaffen wird, das eine flexible Integration in bestehende Datenverarbeitungsprozesse erlaubt.

Gemäß einem weiteren Aspekt der Erfindung wird die Systemanordnung so erweitert, dass eine dynamische Bewertungslogik integriert ist, die das Vertrauen in einzelne Zertifikatsquellen anhand historischer Bewertungsmuster, Quelltransparenz oder Konsensverhalten gewichtet. Dies hat den Vorteil, dass nicht nur die Gültigkeit eines Zertifikats, sondern auch die Vertrauenswürdigkeit seiner Quelle automatisiert beurteilt werden kann, was insbesondere in offenen oder föderierten Datenökosystemen von Relevanz ist.

Gemäß einem weiteren Aspekt der Erfindung wird ein Prüfmechanismus integriert, der es erlaubt, aus einem zertifizierten Datensatz automatisch festzustellen, ob und unter welchen Bedingungen dieser in bestimmten Zielsystemen oder regulatorischen Umgebungen verwendet werden darf. Dies hat den Vorteil, dass regulatorische Anforderungen, z. B. aus Datenschutz oder Exportkontrolle, frühzeitig im Verarbeitungsprozess berücksichtigt werden und so automatisierte Regelkonformität ermöglicht wird.

Eine digitale Informationseinheit im Sinne der vorliegenden Erfindung bezeichnet jegliche elektronische Repräsentation von Informationen in strukturierter oder unstrukturierter Form, die als digitale Datei, Datenpaket oder Datenstrom vorliegen kann. Beispiele hierfür sind Textdateien, Tabellen, Audioaufnahmen, Sensordaten, Bilder oder Videoformate. Die Informationseinheit muss dabei so beschaffen sein, dass sie durch eine Transformationsregel in eine strukturierte Darstellung überführt werden kann, die zur Hash-Wert-Ermittlung geeignet ist. Ein Beispiel für eine digitale Informationseinheit ist eine vom Wetterdienst erzeugte CSV-Datei mit Temperaturmesswerten eines bestimmten Zeitraums.

Unter einer Transformationsregel wird im Rahmen der Erfindung eine definierte technische Vorschrift verstanden, durch welche eine digitale Informationseinheit vor der Hash-Berechnung in eine standardisierte, einheitlich strukturierte Form gebracht wird. Diese Regel kann Schritte wie die Umwandlung von Zeichencodierungen, das Entfernen nichtsignifikanter Formatierungen oder das Einfrieren von Zeitstempeln umfassen. Ziel ist es, semantisch gleiche Daten trotz unterschiedlicher Dateiformate oder Darstellung identisch hash-bar zu machen. Ein Beispiel ist die Anwendung einer Normalisierungsregel auf eine XML-Datei, bei der alle Leerzeichen und Zeilenumbrüche entfernt und Attribute alphabetisch sortiert werden.

Ein Hash-Wert ist eine eindeutige, durch Anwendung einer kryptografischen Hash-Funktion erzeugte Zeichenkette fester Länge, welche eine digitale Informationseinheit eindeutig repräsentiert. Bereits kleinste Änderungen an der zugrunde liegenden Informationseinheit führen zu einem vollständig anderen Hash-Wert. Der Hash-Wert dient in der vorliegenden Erfindung zur Identifikation, Integritätsprüfung und Verknüpfung mit Zertifikaten. Ein Beispiel ist die Anwendung der SHA-512- oder BLAKE3-Hashfunktion auf eine PDF-Datei, wobei der resultierende Hash-Wert als digitaler Fingerabdruck dieser Datei fungiert.

Ein Zertifikat bezeichnet im Kontext dieser Erfindung eine strukturierte digitale Dateneinheit, die Aussagen über eine digitale Informationseinheit enthält, insbesondere über deren Herkunft, Ursprünglichkeit, Nutzungsrechte oder Verarbeitungseinschränkungen. Es besteht aus einem Zertifikatstyp und einem Satz zugehöriger Zertifikatsangaben. Ein Zertifikat kann beispielsweise bestätigen, dass ein bestimmtes Satellitenbild von einer definierten Quelle (z. B. ESA) stammt, in einer bestimmten Region aufgenommen wurde und nur für Forschungszwecke verwendet werden darf.

Ein Zertifikatstyp ist eine standardisierte Definition der Struktur eines Zertifikats, einschließlich der darin enthaltenen Attribute, deren Datenformate, Bedeutungen und Prüfbedingungen. Er legt fest, welche Arten von Aussagen in einem zugehörigen Zertifikat gemacht werden können. Der Zertifikatstyp wird einmalig definiert und im verteilten Rechensystem gespeichert. Ein Beispiel ist ein Zertifikatstyp namens "Verarbeitungserlaubnis", welcher die Attribute "Datenquelle", "Zweck", "Region" und "Gültigkeitsdauer" spezifiziert.

Ein verteiltes Rechensystem bezeichnet eine aus mehreren, über ein Netzwerk verbundenen Knoten bestehende Infrastruktur, die gemeinsam eine konsistente Datenhaltung sicherstellt. In der Erfindung wird dieses System verwendet, um Metadaten, Zertifikatstypen und Zertifikatsverknüpfungen dauerhaft, versionierbar und unveränderlich zu speichern. Ein Beispiel ist ein auf Hyperledger Fabric basierendes Blockchain-Netzwerk mit mehreren unabhängigen Betreibern, die jeweils einen Teil der Datenhaltung und der Konsensbildung übernehmen.

Ein kryptografisches Nachweisverfahren dient dem Nachweis einer bestimmten Information, ohne diese selbst offenlegen zu müssen. In der Erfindung wird dieses Verfahren verwendet, um einem externen Prüfer glaubhaft zu machen, dass bestimmte Bedingungen im Zertifikat erfüllt sind, ohne sensible Inhalte preiszugeben. Technisch kann dies etwa durch Zero-Knowledge-Protokolle wie zk-SNARKs, zk-STARKs oder Bulletproofs umgesetzt werden. Ein Beispiel ist die Bestätigung, dass ein Zertifikat eine Verarbeitungsfreigabe für die Region "München Südwest" enthält, ohne die vollständige Geolokalisierung offenzulegen.

Externe Programme oder Prüfsysteme sind rechnergestützte Anwendungen oder Prozesse, die nicht Teil des verteilten Rechensystems sind, jedoch über standardisierte Schnittstellen mit diesem interagieren können. Sie können Zertifikate prüfen, anfragen, erstellen oder widerrufen. Ein Beispiel ist ein Kl-gestützter Analyseprozess in einem Verwaltungsnetzwerk, der nur dann auf bestimmte Daten zugreift, wenn das zugehörige Zertifikat eine ausreichende Herkunftsverifikation aufweist.

Zertifikatsangaben bezeichnen die konkreten inhaltlichen Aussagen eines ausgestellten Zertifikats, z. B. zu Quelle, Nutzungsrecht, geografischer Einschränkung oder Zeitrahmen. Diese Angaben werden beim Ausstellen des Zertifikats definiert und können bei der Verarbeitung oder Freigabeprüfung einzeln oder kombiniert herangezogen werden. Ein Beispiel ist die Zertifikatsangabe "Verwendungszweck: Entscheidungsgrundlage für Hochwasserprognose".

Ein Konsensmechanismus im Sinne der vorliegenden Erfindung bezeichnet ein technisches Verfahren innerhalb des verteilten Rechensystems, mit dem mehrere, unabhängige Systemknoten eine einheitliche Entscheidung über den aktuellen Stand der gespeicherten Daten treffen. Dies betrifft insbesondere das Einfügen, Ändern oder Löschen von Zertifikatstypen, Metadaten oder Zertifikatszuweisungen. Der Konsensmechanismus basiert typischerweise auf Mehrheitsverfahren, wie z. B. byzantinischer Fehlertoleranz (BFT), Proofof-Authority (PoA) oder Raft-Algorithmen. Ein Beispiel ist die Entscheidung über die Akzeptanz eines neu beantragten Zertifikats durch mindestens zwei Drittel der beteiligten Betreiberknoten im Netzwerk.

Eine Programmschnittstelle (Application Programming Interface, API) ist ein definierter Zugriffspunkt für externe Software, um mit den im verteilten Rechensystem gespeicherten Komponenten zu interagieren. Die Schnittstelle ermöglicht Operationen wie das Abrufen, Einreichen, Prüfen oder Widerrufen von Zertifikaten sowie das Hochladen und Aktualisieren von Metadaten und Zertifikatstypen. Sie stellt strukturierte Anfrage- und Antwortformate bereit, typischerweise im JSON- oder XML-Format. Ein Beispiel ist eine RESTful API, über die ein externer Datenverarbeitungsdienst prüfen kann, ob für eine ihm vorliegende Datei ein gültiges Zertifikat mit regionaler Nutzungserlaubnis existiert.

Eine Laufzeitumgebung im Sinne der Erfindung bezeichnet eine geschützte Ausführungsumgebung, in der kryptografische Prüfungen oder Verarbeitungsschritte unter hohen Sicherheitsanforderungen vorgenommen werden. Die Laufzeitumgebung kann z. B. als Trusted Execution Environment (TEE) oder als virtualisierte Containerumgebung mit Zugriffskontrolle realisiert sein. Sie erlaubt es, sensible Zertifikatsprüfungen auszuführen, ohne dass interne Prüfparameter oder vertrauliche Datenbestandteile das System verlassen. Ein Beispiel ist ein Hardware-Sicherheitsmodul (HSM), das eine Zertifikatsprüfung durchführt und lediglich den Status "gültig" oder "ungültig" an ein externes System übermittelt.

Metadaten bezeichnen strukturierte Zusatzinformationen zu einer digitalen Informationseinheit, welche deren technische, semantische oder kontextuelle Eigenschaften beschreiben. Im Rahmen der Erfindung umfassen Metadaten insbesondere die Transformationsregel zur Hash-Erzeugung, Erstellungszeitpunkte, Quellenkennzeichnungen, Versionierungen sowie Referenzen zu zugehörigen Zertifikaten. Sie dienen sowohl der Wiederauffindbarkeit der Informationseinheit im Rechensystem als auch als Grundlage für die Zertifizierung. Ein Beispiel ist ein JSON-Dokument, das für eine Bilddatei die Kamera-ID, den Aufnahmezeitpunkt, die Bildauflösung sowie die verwendete Transformationsregel dokumentiert.

Ein Zertifikatswiderruf ist ein Prozess, bei dem ein zuvor ausgestelltes Zertifikat seine Gültigkeit verliert. Dies kann auf Antrag eines berechtigten externen Systems oder durch interne Regelverletzungen (z. B. Zeitablauf, Vertrauensverlust, Regelverstoß) erfolgen. Der Widerruf wird im verteilten Rechensystem dokumentiert und über den Konsensmechanismus bestätigt, sodass alle Netzwerkknoten den Status des Zertifikats synchronisiert erkennen. Ein Beispiel ist der automatische Widerruf eines Zertifikats, wenn durch einen nachgelagerten Prozess festgestellt wird, dass die Ursprungsdaten manipuliert wurden oder die Gültigkeitsdauer überschritten ist.

Der Zertifikatstypenkatalog ist eine Sammlung definierter Zertifikatstypen, die jeweils festlegen, welche Attributstrukturen, Datenformate und Prüfbedingungen ein Zertifikat dieses Typs aufweisen muss. Der Katalog wird innerhalb des verteilten Rechensystems gespeichert und kann von externen Systemen zur Prüfung, Planung oder Beantragung von Zertifikaten abgefragt werden. Die Verwendung eines strukturierten Katalogs gewährleistet die Einheitlichkeit und Prüfbarkeit aller Zertifikate im System. Ein Beispiel ist ein öffentlich zugänglicher Typenkatalog, der festlegt, dass Zertifikate für Umweltdaten zwingend die Angaben "Messregion", "Zeitintervall" und "Kalibrierstatus" enthalten müssen.

Die Aufgabe wird auch gelöst durch eine Systemanordnung zur Verifizierung der Herkunft und Ursprünglichkeit sowie zur kontrollierten Verarbeitung von reproduzierbaren digitalen Informationseinheiten, umfassend eine Einheit zum Ermitteln eines Hash-Werts einer digitalen Informationseinheit durch Anwendung einer definierten Transformationsregel, die die Informationseinheit in eine einheitlich strukturierte und hash-berechenbare Darstellung überführt, eine Einheit zum Speichern des Hash-Werts und zugehöriger Metadaten in einem verteilten Rechensystem, wobei durch kryptografische Verfahren eine nachträgliche Veränderung der gespeicherten Daten verhindert wird, eine Einheit zum Festlegen eines Zertifikattyps mit einer oder mehreren Zertifikatsangaben, wobei die Festlegung dauerhaft im verteilten Rechensystem gespeichert wird, eine Einheit zum Verknüpfen eines ausgestellten Zertifikats mit dem Hash-Wert der digitalen Informationseinheit, und eine Einheit zum Prüfen der Herkunft, Ursprünglichkeit und Verarbeitungserlaubnis durch selektives Offenlegen einzelner Zertifikatsangaben gegenüber einem externen Prüfsystem, wobei ein kryptografisches Nachweisverfahren verwendet wird, das auf dem Prinzip basiert, dass der Nachweis der Gültigkeit einer bestimmten Information erfolgt, ohne deren tatsächlichen Inhalt preiszugeben, indem mathematisch überprüfbare Beweise erzeugt werden, die lediglich die Erfüllung der Prüfbedingungen bestätigen.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung; und
- Figur 2:: ein schematisches Blockschaltbild der vorgeschlagenen Systemanordnung gemäß einem Aspekt der vorliegenden Erfindung.

Die vorliegenden Figuren weisen teilweise Parameter auf, welche dem Fachmann in der englischen Bezeichnung so geläufig sind und welche als Parameter verwendet werden und so nicht zu übersetzen sind.

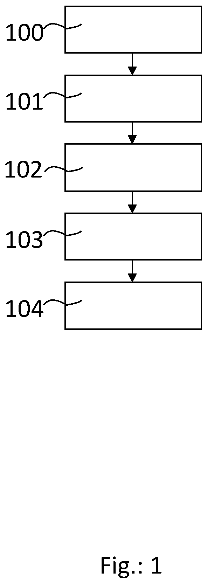

Figur 1 zeigt in einem schematischen Ablaufdiagramm ein Verfahren zur Verifizierung der Herkunft und Ursprünglichkeit sowie zur kontrollierten Verarbeitung von reproduzierbaren digitalen Informationseinheiten, umfassend die Schritte Ermitteln 100 eines Hash-Werts einer digitalen Informationseinheit durch Anwendung einer definierten Transformationsregel, die die Informationseinheit in eine einheitlich strukturierte und hash-berechenbare Darstellung überführt, Speichern 101 des Hash-Werts und zugehöriger Metadaten in einem verteilten Rechensystem, wobei durch kryptografische Verfahren eine nachträgliche Veränderung der gespeicherten Daten verhindert wird, Festlegen 102 eines Zertifikattyps mit einer oder mehreren Zertifikatsangaben, wobei die Festlegung dauerhaft im verteilten Rechensystem gespeichert wird, Verknüpfen 103 eines ausgestellten Zertifikats mit dem Hash-Wert der digitalen Informationseinheit, und Prüfen 104 einer Herkunft, Ursprünglichkeit und Verarbeitungserlaubnis durch selektives Offenlegen einzelner Zertifikatsangaben gegenüber einem externen Prüfsystem, wobei ein kryptografisches Nachweisverfahren verwendet wird, das auf einem Prinzip basiert, dass ein Nachweis der Gültigkeit einer bestimmten Information erfolgt, ohne deren tatsächlichen Inhalt preiszugeben, indem mathematisch überprüfbare Beweise erzeugt werden, welche lediglich die Erfüllung der Prüfbedingungen bestätigen.

Gemäß einem weiteren Aspekt der vorliegenden Erfindung kann die zur Ermittlung des Hash-Werts verwendete Transformationsregel dynamisch an das Format und den Ursprung der digitalen Informationseinheit angepasst werden. Dies bedeutet, dass die Regel nicht statisch für alle Datentypen gleich bleibt, sondern beispielsweise für Bild-, Text- oder Sensordaten spezifisch parametrisiert wird. Die Regel ist dabei in den Metadaten der jeweiligen Informationseinheit referenziert und ermöglicht eine standardisierte Darstellung, die unabhängig von Darstellungsvarianten eine einheitliche Hash-Berechnung gewährleistet. Dies hat den Vorteil, dass auch bei heterogenen Datenformaten oder bei der Integration unterschiedlicher Datenquellen eine konsistente Identitätsprüfung auf Basis des Hash-Werts erfolgt.

In einer weiteren bevorzugten Ausführungsform wird das kryptografische Nachweisverfahren so implementiert, dass eine strukturierte und formal beschreibbare Beweisführung über Zertifikatsangaben möglich ist, ohne dass deren Inhalte explizit preisgegeben werden müssen. Dabei wird für jedes prüfbare Attribut ein mathematisch verifizierbarer Beweis generiert, beispielsweise durch ein Zero-Knowledge-Protokoll wie zk-SNARKs oder Bulletproofs, der nur dann erfolgreich validiert wird, wenn die hinterlegte Aussage tatsächlich zutrifft. Dies hat den Vorteil, dass selbst hochsensible Zertifikatsinhalte wie Geostandorte, Nutzungslizenzen oder Sicherheitsfreigaben datenschutzkonform überprüft werden können, ohne dass die Informationen selbst offengelegt werden müssen.

Ein weiterer Aspekt der Erfindung betrifft die Erweiterung der Zertifikatsdefinition um eine Gültigkeitsdauer oder ein Verfallsintervall. Das bedeutet, dass bei der Ausstellung eines Zertifikats neben den inhaltlichen Attributen auch eine zeitliche Einschränkung definiert wird, die die Verwendung des Zertifikats automatisch nach einem bestimmten Zeitpunkt blockiert. Durch diese zeitbasierte Gültigkeit können insbesondere flüchtige oder sicherheitskritische Informationen gezielt zeitlich gesteuert freigegeben werden, ohne dass ein expliziter Widerruf erforderlich ist. Dies reduziert Verwaltungsaufwand und erhöht die Reaktionsfähigkeit in dynamischen Datenumgebungen.

Darüber hinaus sieht die Erfindung vor, dass das verteilte Rechensystem zur Speicherung der Zertifikatdefinitionen und Metadaten um eine Protokoll- und Versionsschicht ergänzt wird. Jede Änderung an einem gespeicherten Eintrag - sei es eine Aktualisierung der Zertifikatsstruktur oder eine Ergänzung der Metadaten - erzeugt automatisch einen neuen, versionsspezifischen Eintrag mit eindeutiger Referenz zur vorhergehenden Version. Diese revisionssichere Historisierung ermöglicht es, alle Zustandsänderungen lückenlos nachzuvollziehen. Dies hat den Vorteil, dass auch nach längerer Zeit oder im Streitfall die Zertifizierungslage eines Informationsobjekts eindeutig und manipulationssicher nachvollzogen werden kann.

In einer weiteren Ausführungsform wird die Programmschnittstelle des Systems so ausgestaltet, dass externe Systeme nicht nur einzelne Zertifikate abrufen oder ausstellen können, sondern komplexe Verarbeitungsketten beschreiben können, deren Ausführbarkeit vom Vorliegen bestimmter Zertifikatsbedingungen abhängt. Die Schnittstelle erlaubt deklarative Anfragen, z. B. in Form einer Abfragesprache, mit der spezifiziert wird, welche Art von Daten verarbeitet werden darf, unter welchen Bedingungen die Verarbeitung freigegeben wird und ob bestimmte Regionen oder Nutzerprofile ausgeschlossen sind. Dies hat den Vorteil, dass die Verarbeitungslogik auf Basis der im System gespeicherten Zertifikatsinformationen dynamisch gesteuert werden kann, ohne dass hartcodierte Prüfregeln in den Anwendungen erforderlich sind.

Ein weiterer Aspekt der Erfindung betrifft die Einführung eines kollektiven Freigabemechanismus für die Zertifikatsausstellung. Hierbei wird die Gültigkeit eines neuen Zertifikats erst dann als bestätigt betrachtet, wenn eine zuvor definierte Anzahl vertrauenswürdiger Instanzen im verteilten System die zugrundeliegenden Metadaten überprüft und die Ausstellung per Konsensverfahren freigegeben hat. Dies bietet insbesondere in regulatorischen oder föderierten Szenarien mit mehreren unabhängigen Akteuren ein hohes Maß an Vertrauenswürdigkeit, da kein einzelner Aussteller die Zertifikatsstruktur allein kontrollieren oder manipulieren kann.

Ferner wird in einer weiteren Ausgestaltung die Struktur der Zertifikate selbst modular aufgebaut, sodass einzelne Attribute unabhängig validierbar und mit optionalen digitalen Signaturen versehen werden. Diese modulare Struktur erlaubt eine feinkörnige Zertifikatsprüfung, bei der externe Systeme nur jene Teile des Zertifikats betrachten müssen, die für ihren Verarbeitungskontext relevant sind. Dies trägt nicht nur zur besseren Skalierbarkeit bei, sondern unterstützt insbesondere in sensiblen Anwendungen das Prinzip der Datensparsamkeit.

Gemäß einem weiteren Aspekt wird bei der Hash-Berechnung zusätzlich berücksichtigt, unter welchen Umgebungsbedingungen die Informationseinheit erzeugt wurde. Dazu können Merkmale wie Zeitstempel, Prozesssignaturen, Gerätekennungen oder Quellnetzwerke in die Transformationsregel einfließen, wodurch eine differenzierte Identifizierung selbst formal identischer Inhalte ermöglicht wird. Dies ist insbesondere vorteilhaft in Systemen mit hoher Wiederverwendungsrate von Daten, etwa in der Satellitendatenverarbeitung oder in automatisierten loT-Umgebungen.

In einer besonders bevorzugten Ausführungsform erfolgt die Prüfung der Zertifikatsangaben durch ein in sich geschlossenes Prüfsystem innerhalb einer vertrauenswürdigen Laufzeitumgebung, wobei nur das Prüfergebnis - also z. B. eine Ja/Nein-Antwort - nach außen kommuniziert wird. Die zugrunde liegenden Prüfbedingungen und Nachweise verbleiben dabei innerhalb der geschützten Ausführungsumgebung, wodurch selbst bei Durchführung der Prüfung in öffentlich zugänglichen Cloud-Infrastrukturen keine Offenlegung sensibler Inhalte erfolgt. Diese Architektur erhöht die Sicherheit der Prüfprozesse ohne Einbußen bei der Interoperabilität.

Schließlich wird gemäß einem weiteren Aspekt der vorliegenden Erfindung die Bewertung der Vertrauenswürdigkeit einzelner Zertifikatsquellen durch ein lernfähiges Bewertungsmodell unterstützt, das z. B. auf bisherigen Verhaltensmustern, Veröffentlichungsfrequenz oder Abweichungen von definierten Standards basiert. Dieses Bewertungsmodell kann in Entscheidungsprozesse eingebunden werden, bei denen mehrere Zertifikate zur Auswahl stehen oder Unsicherheiten hinsichtlich der Zertifikatsquelle bestehen. Dies hat den Vorteil, dass datengetriebene Systeme automatisch eine risikoadaptive Auswahl treffen können, ohne auf eine zentrale Autorität angewiesen zu sein.

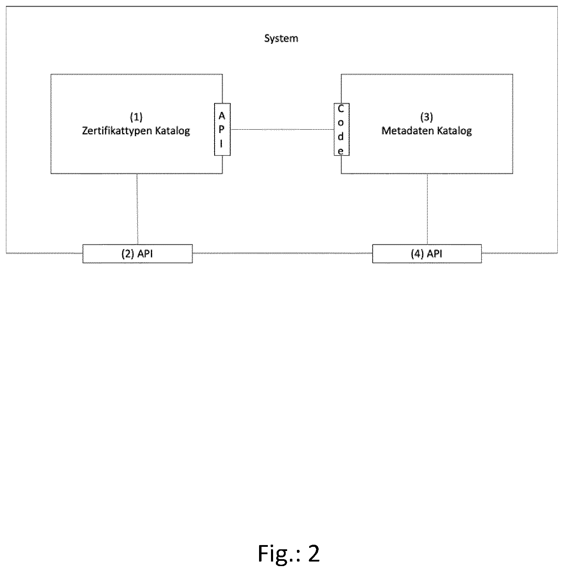

Figur 2 zeigt ein schematisches Blockschaltbild der vorgeschlagenen Systemanordnung. Die Erfindung betrifft ein System zur Verifizierung der Herkunft und Ursprünglichkeit von Informationseinheiten sowie deren kontrollierte Verarbeitung, unabhängig von deren Speicherung, gemäß dem Oberbegriff des Anspruchs 1. Ein solches System ist insbesondere zur Informationssicherung bei Künstlicher Intelligenz sowie der Erstellung von Informationsprodukten (z.B. Entscheidungsvorlagen in digitaler Form) auf der Basis von reproduzierbaren digitalen Informationseinheiten nützlich, da es eine Verifizierung der Herkunft und Ursprünglichkeit nicht nur des Informationsproduktes, sondern auch der verwendeten reproduzierbare digitale Informationseinheiten selbst, unabhängig von deren Speicherung, ermöglicht.

Reproduzierbare digitale Informationseinheiten sind jede Art digitaler Daten, die sich zum Weck der Hashberechnung durch Anwendung einer festgelegten Transformationsvorschrift, die vom Hersteller oder Verarbeiter in Figur 2 Bezugszeichen 1 hinterlegt wurde, darstellen lassen. Hierbei ist es unerheblich ob diese Informationseinheiten flüchtig oder nicht-flüchtig verfügbar sind.

In letzter Zeit werden in der Informationsverarbeitung Fabric- oder Mesh-Architekturen umgesetzt, um eine schnelle und harmonisierte Zusammenführung von Informationseinheiten zu erleichtern. Insbesondere der Aufbau von Wissensbasen für die Verwendung Künstlicher Intelligenz benötigt intelligente, von der Speicherung unabhängige Möglichkeiten die Informationseinheiten zusammen zu bringen. Die Herstellung von Informationssicherung, welches eine Verifizierung der Herkunft und Ursprünglichkeit der Informationseinheiten voraussetzt kann dezentral in den Systemen der einzelnen Betreiber (Hersteller oder Verarbeiter) unter Verwendung des Systems, das unter dem Oberbegriff des Anspruchs 1 vorgestellt wurde, umgesetzt werden. Dazu beteiligen sich alle Hersteller und Verarbeiter am Betrieb des Systems.

Bevor ein Hersteller oder Verarbeiter eine Zertifizierung von produzierten Informationseinheiten anbieten kann, müssen ein oder mehrere Zertifikattypen definiert werden und deren Struktur sowie die Bedeutung der Zertifikatattribute in Figur 2 Bezugszeichen 1 abgespeichert werden. Für die Definition von Zertifikattypen, welche Attribute diese Typen enthalten und was deren Bedeutung bzgl. kontrollierter Ausführung von Programmen auf Rechnern oder Geräten angeht, ist der Hersteller oder Verarbeiter von Informationseinheiten eigenverantwortlich tätig; vom System werden keine Vorgaben gemacht. Hierdurch wird ein agiles Zertifikatmanagement ermöglicht, das flexibel einsetzbar ist.

Jedes Mal, wenn eine Informationseinheit erzeugt oder verarbeitet wird, für die eine Zertifizierung möglich sein soll, wird entweder die Informationseinheit selbst oder entsprechende aussagekräftige Metadaten zur Informationseinheit in Figur 2 Bezugszeichen 3 gespeichert. Der entsprechende Eintrag in Figur 2 Bezugszeichen 3 bestätigt, dass eine entsprechende Datenverarbeitung stattgefunden hat und eine Zertifizierung möglich ist. Programme auf Rechnern oder Geräten außerhalb des Systems können über Schnittstellen diesen Eintrag finden und nutzen um eine entsprechende Zertifizierung für die erzeugte Informationseinheit anzufragen.

Ein vertrauenswürdiges Programm, das autonom auf einem nicht zum System gehörigen Rechner oder Gerät läuft oder von einem Menschen gesteuert wird und das zur Erstellung oder Verarbeitung von Informationseinheiten ein Zertifikat benötigt, publiziert erforderliche Zertifikattypen und die damit ermöglichten Verarbeitungsschritte eigenständig. Ein anderes Programm, das dieses vertrauenswürdige Programm ausführen möchte benötigt neben der zu nutzen Informationseinheit auch das zugehörige Zertifikat vom entsprechenden Typ.

Die Ausführung eines vertrauenswürdigen Programms setzt eine positive Überprüfung der Herkunft und Ursprünglichkeit der zu verarbeitenden oder zu erstellenden Informationseinheit(en) voraus und folgt den Kontrollanweisungen, die im Zertifikat hinterlegt sind. Da die Kontrollinformationen je Zertifikattyp unterschiedlich sind und der Zertifikataussteller die Kontrollanweisungen anhand verschiedener Kriterien bestimmt, ist es erforderlich bei der Zertifikatausstellung den beabsichtigten Verarbeitungsschritt anzugeben.

Das vorgeschlagene System umfasst die Komponente zur manipulationsresistenten, nichtveränderlichen Speicherung der Zertifikatdefinitionen, Figur 2 Bezugszeichen 1, links, sowie die Komponente zur manipulationsresistenten, versionsunterstützenden Speicherung von Informationseinheiten bzw. deren Metadaten, Figur 2 Bezugszeichen 3, rechts. Ebenso ist die Programmlogik des Systems relevant, dass die Grundfunktionen steuert und ebenso externen Programmen über Schnittstellen erlaubt kontrolliert mit dem System zu interagieren.

Eine Implementierung von Figur 2 Bezugszeichen 1 kann z.B. durch die Verwendung von Hyperledger Indy erfolgen. Hyperledger Indy ist eine Open Source Initiative für das Management von Self-Sovereign-Identifier basierten Lösungen. Hyperledger Indy bietet zwar eine direkte Lösung zur Umsetzung von Figur 2 Bezugszeichen 1 an, allerdings ist die Motivation eine DSGVO (GDPR) konforme Verteilte Authentifizierung von Akteuren (Personen, Prozesse, usw.) zu ermöglichen. Das vorgeschlagene System erweitert die Möglichkeiten des Hyperledger Indy Frameworks durch die Anbindung eigener Programmlogik als sog. Business-Logik. Insbesondere ist hier die Business-Logik gemeint, die zur Ausstellung von Zertifikaten entsprechende Informationen einsammelt, die u.a. aus Figur 2 Bezugszeichen 3 aber ebenso aus Interaktion mit externen Benutzern oder Programmen stammen. Weiter gezeigt sind unten zwei Schnittstellen 2 und 4.

Eine Implementierung der Komponente von Figur 2 Bezugszeichen 3 kann z.B. durch die Verwendung von Hyperledger Fabric erfolgen. Hyperleder Fabric ist eine Open Source Initiative für das Umsetzen von nicht manipulierbaren dezentralen Datenbanken bei denen das Vertrauen durch Mehrheitsentscheidungen der Betreiber erreicht wird. Hyperledger Fabric ist ein Framework, der mittels Distributed-Leger Technologie funktioniert. Eine konkrete Lösung kann mit Hyperledger Fabric dann durch Einsatz sog. Chain-Codes, also Anwendungen die auf den Distributed-Ledgers ausgeführt werden, umgesetzt werden. Bzgl. der Implementierung von Figur 2 Bezugszeichen 3 nutzt das System entsprechende Chain-Codes die eine entsprechende Interaktion erlauben.

Das neuartige am System ist die Kopplung der Möglichkeiten von agilem Zertifikatmanagement mit der persistenten Speicherung von Informationseinheiten oder deren Echtheitsinformationen, die als Zertifizierungsgrundlage genutzt werden. Somit entsteht ein System dessen ausgestellte Zertifikate von externen Programmen genutzt werden können um die Überprüfung der Herkunft und Ursprünglichkeit von reproduzierbaren digitalen Informationseinheiten (RDI) zu überprüfen und deren kontrollierbare Verarbeitung sicherzustellen.

Die Bezugszeichen können im einzelnen wie folgt verstanden werden:
(1) Komponente zur manipulationsresistente nicht-flüchtige Speicherung von Zertifikatdefinitionen
(2) Externe Schnittstelle zur Interaktion mit Komponente 1
(3) Komponente zur manipulationsresistente versionsunterstützende nicht-flüchtige Speicherung von Informationseinheiten oder deren Metadaten
(4) Externe Schnittstelle zur Interaktion mit Komponente 3

Im Folgenden wird die vorliegende Erfindung anhand "Beispiel Satellitendaten" beschrieben.

### Metadaten Katalog - Figur 2 Bezugszeichen 3

Die ESA erstellt eine Informationseinheit (Satellitenbild) die als ZIP-Datei vom ESA-Portal heruntergeladen werden kann. Diese ZIP-Datei hat keinen weiteren Schutz und kann auch nicht auf Herkunft und Veränderbarkeit geprüft werden.
1) Satellitendatei wird von der ESA erstellt und zum Download angeboten.
2) Hash der Datei wird errechnet.
3) Hash und die zur Zertifizierung erforderlichen (Meta)Daten werden in Katalog, Figur 2 Bezugszeichen 3, über Schnittstelle Figur 2 Bezugszeichen 4 hochgeladen

Ein Nutzer macht einen Download der ZIP-Datei und speichert diese "irgendwo" ab. Speicherung lokal, auf Geräten, Cloud, USB Stick, etc. Nun soll diese Datei Tage, Monate, oder sogar Jahre nach dem Download verwendet werden. Wie kann der Nutzer nun sicherstellen, dass es sich bei der Datei um das Original von der ESA handelt?
4) Nutzer errechnet Hash der Datei unter Verwendung der lokalen Datei.
5) Mittels Hash wird im Katalog (Figur 2 Bezugszeichen 3) nach einem Eintrag gesucht.
6) Ergibt sich ein Treffer, weiß der Nutzer, dass es sich bei der Datei um das Original handelt. Anhand der Metadaten aus dem Katalogeintrag kann der Nutzer nun ein Zertifikat zur weiteren Verarbeitung durch vertrauenswürdige Prozesse erhalten.

Wichtig bei diesem Katalog ist die Garantie der manipulationsresistenten Speicherung, weil sonst keine Garantie für die Einträge im Katalog gemacht werden kann (single point of trust). Da es ebenfalls andere Satellitenbetreiber gibt, die auch eigene Kataloge haben ist die Idee, diese zu vernetzen (Blockchain). Hieraus ergibt sich ein globaler Katalog in dem alle Satellitenbetreiber ihre Einträge machen.

### Zertifikattypen Katalog - Figur 2 Bezugszeichen 1

Mit der ZIP-Datei soll eine vertrauenswürdige Entscheidungsvorlage erstellt werden. Dazu muss sichergestellt werden, dass es einen vertrauenswürdigen Prozess gibt und dass dieser nur vertrauenswürdige Dateien verarbeitet.
1) Nutzer erfragt beim vertrauenswürdigen Prozess welches Zertifikat für die Produktion einer vertrauenswürdigen Entscheidungsvorlage erforderlich ist.
2) Nutzer verwendet die Metadaten aus Figur 2 Bezugszeichen 3 um mit dem Zertifikat-Katalog des Herstellers in Kontakt zu treten.
3) Nutzer sucht im Zertifikattypen Katalog des Herstellers unter welchen Bedingungen für die ZIP-Datei ein Verarbeitungszertifikat für den Zweck "vertrauenswürdige Entscheidungsvorlage" abgerufen werden kann.
4) Nutzer erhält das Zertifikat "vertrauenswürdige Entscheidungsvorlage" für die ZIP-Datei und kann nun den vertrauenswürdigen Prozess ausführen (und ZIP-Datei als Eingabe bereitstellen).

Zertifikattypen Katalog muss manipulationssicher sein, weil die Struktur eines Zertifikates für die Prüfung wichtig ist und nicht veränderbar sein darf. Sonst könnte man eine korrekte Prüfung für bestimmte Zertifikate manipulieren.

Vertrauenswürdige Prozesse sind extern, nutzen aber System Schnittstelle (Figur 2 Bezugszeichen 2) zur Faktenprüfung. Für die Faktenprüfung von Zertifikaten ist es fundamental zu wissen, welche Faken ein Zertifikat enthält. Dies kann über den Zertifikattypen Katalog abgefragt werden.

Beispiel: Das Satellitenbild der ZIP-Datei ist für das sensible Gebiet München Südwest. Ein vertrauenswürdiger Prozess verarbeitet Satellitenbilder für diese sensible Region nur dann, wenn der Nutzer ein Zertifikat besitzt, das die Verarbeitung dieser ZIP-Datei in der sensiblen Region München Südwest besitzt. Also z.B. wird vom Prozess geprüft ob das Zertifikat die Fakten "Region: München Südwest" und "Verarbeitung: vertrauenswürdige Entscheidungsvorlage" enthält. Vom Zertifikattypen Katalog ist bekannt, dass es einen Zertifikattyp gibt, der diese Information enthält. -> Digital Rights Management durch Zertifikate. Zertifikat -> Digitaler Vertrag.

Die vorliegende Erfindung betrifft ein System bestehend aus verteilten Rechnern mit darauf ausgeführter Programmlogik, das die Verifizierung der Herkunft und Ursprünglichkeit von reproduzierbaren digitalen Informationseinheiten (RDI) sowie deren kontrollierbare Verarbeitung unterstützt. Das System ist so ausgestaltet, dass Nutzer des Systems eigene sogenannte agile Zertifikate definieren können. Die Definitionen dieser Zertifikate, einschließlich ihrer Attribute und der jeweiligen Bedeutung für die Durchführung von Faktenprüfungen und kontrollierten Verarbeitungsprozessen, werden dauerhaft und unveränderlich im verteilten Rechensystem gespeichert. Zusätzlich werden auch die Metadaten zu den einzelnen Informationseinheiten in einer Form abgelegt, die sowohl gegen Manipulation geschützt als auch versionierbar und dauerhaft abrufbar ist. Externe Programme können über standardisierte Schnittstellen sowohl neue Zertifikatdefinitionen als auch Metadaten zu digitalen Informationseinheiten in das System einbringen. Besonders hervorzuheben ist, dass das System durch den Einsatz kryptografischer Verfahren, insbesondere unter Verwendung von Null-Wissen-Beweisen in Verbindung mit selektiver Offenlegung einzelner Zertifikatsattribute, eine Prüfung des Zertifikatsbesitzes und der inhaltlichen Aussagen ermöglicht, ohne dass der Inhaber des Zertifikats sensible Informationen offenlegen muss.

Gemäß einer bevorzugten Ausführungsform des Systems wird diejenige Transformationslogik, die erforderlich ist, um eine digitale Informationseinheit in eine normierte, für die Hash-Berechnung geeignete Darstellung zu überführen, direkt innerhalb der Metadatenstruktur gespeichert. Die Speicherung erfolgt hierbei in dem Teil des Systems, der in Figur 2 Bezugszeichen 3 bezeichnet ist. Durch diese Maßnahme wird sichergestellt, dass die Hash-Erzeugung stets reproduzierbar und nachvollziehbar ist, auch wenn die ursprüngliche Darstellung der Informationseinheit variiert.

In einer weiteren vorteilhaften Ausgestaltung erfolgt die Verknüpfung von reproduzierbaren digitalen Informationseinheiten mit einem oder mehreren Zertifikaten auf Basis des zuvor erzeugten Hash-Werts in der genannten normierten Form. Die zur Erzeugung dieses Hash-Werts eingesetzte Transformationslogik wird dabei aus den in den Metadaten gespeicherten Angaben entnommen. Dadurch wird sichergestellt, dass die Integrität der Zuordnung von Daten und Zertifikaten gewährleistet bleibt und jede Zertifikatsprüfung auf exakt definierter Datenbasis erfolgen kann.

Das System ist weiterhin so konzipiert, dass externe Rechner oder Geräte, auf denen entsprechende Programme, Dienste oder Prozesse ausgeführt werden, über verfügbare Schnittstellen in der Lage sind, eigene Zertifikatdefinitionen zu erstellen. Diese Definitionen werden nach ihrer Erstellung im Teil des Systems gespeichert, der in Figur 2 Bezugszeichen 1 bezeichnet ist. Von dort aus können sie über geeignete Schnittstellen identifiziert, abgerufen und in weiteren Verarbeitungsschritten verwendet werden.

Eine weitere vorteilhafte Ausführungsform sieht vor, dass externe Rechner oder Geräte mit entsprechender Programmlogik Zertifikate nicht nur definieren, sondern auch erstellen können - und zwar manuell, teilautomatisiert oder vollautomatisiert. Dabei greifen die externen Systeme auf zuvor gespeicherte Definitionen in Figur 2 Bezugszeichen 1 sowie auf Metadaten der Informationseinheiten in Figur 2 Bezugszeichen 3 zu. Das System ermöglicht somit die Erstellung von Zertifikaten auf Basis der gespeicherten Datenstrukturen, ohne dass die eigentliche Informationseinheit erneut vorliegen muss.

Gemäß einer weiteren Ausgestaltung kann ein externes System nicht nur Zertifikate erstellen, sondern auch den Widerruf bereits ausgestellter Zertifikate über definierte Schnittstellen initiieren. Diese Funktion erlaubt es, auf veränderte Rahmenbedingungen, fehlerhafte Datengrundlagen oder sicherheitsrelevante Ereignisse zu reagieren, indem Zertifikate zentral zurückgezogen werden und ihre Gültigkeit systemweit aufgehoben wird.

Darüber hinaus ermöglicht das System eine manuelle, teilautomatisierte oder vollautomatisierte Durchführung von Faktenprüfungen durch externe Systeme, die über die Schnittstellen des Systems zugreifen. Die Faktenprüfung erfolgt insbesondere zur Verifizierung der Herkunft und Ursprünglichkeit von digitalen Informationseinheiten sowie zur Freigabe ihrer kontrollierten Verarbeitung. Hierbei wird ebenfalls auf das Prinzip der selektiven Offenlegung von Zertifikatsangaben in Verbindung mit einem kryptografischen Null-Wissen-Nachweis zurückgegriffen, sodass auch in sicherheitskritischen oder datenschutzsensiblen Anwendungen eine konforme Verifikation möglich ist.

In einer besonders bevorzugten Ausführungsform ist das System so ausgelegt, dass sein Betrieb nicht durch eine zentrale Instanz erfolgt, sondern durch mehrere voneinander unabhängige, sich gegenseitig vertrauende Entitäten. Diese Entitäten bilden gemeinsam das verteilte Rechensystem und stimmen über jede Erzeugung, Änderung oder Löschung von dauerhaft gespeicherten Informationen - insbesondere solchen in Figur 2 Bezugszeichen 3 - im Rahmen eines Mehrheitsbeschlusses ab. Dadurch wird eine einseitige Manipulation ausgeschlossen und die Integrität der gespeicherten Daten auch bei Beteiligung unabhängiger Betreiber sichergestellt.

## Patentansprüche

1. Verfahren zur Verifizierung der Herkunft und Ursprünglichkeit sowie zur kontrollierten Verarbeitung von reproduzierbaren digitalen Informationseinheiten, umfassend die Schritte:
- Ermitteln (100) eines Hash-Werts einer digitalen Informationseinheit durch Anwendung einer definierten Transformationsregel, die die Informationseinheit in eine einheitlich strukturierte und hash-berechenbare Darstellung überführt,
- Speichern (101) des Hash-Werts und zugehöriger Metadaten in einem verteilten Rechensystem, wobei durch kryptografische Verfahren eine nachträgliche Veränderung der gespeicherten Daten verhindert wird,
- Festlegen (102) eines Zertifikattyps mit einer oder mehreren Zertifikatsangaben, wobei die Festlegung dauerhaft im verteilten Rechensystem gespeichert wird,
- Verknüpfen (103) eines ausgestellten Zertifikats mit dem Hash-Wert der digitalen Informationseinheit, und
- Prüfen (104) einer Herkunft, Ursprünglichkeit und Verarbeitungserlaubnis durch selektives Offenlegen einzelner Zertifikatsangaben gegenüber einem externen Prüfsystem, wobei ein kryptografisches Nachweisverfahren verwendet wird, das auf einem Prinzip basiert, dass ein Nachweis der Gültigkeit einer bestimmten Information erfolgt, ohne deren tatsächlichen Inhalt preiszugeben, indem mathematisch überprüfbare Beweise erzeugt werden, welche lediglich die Erfüllung der Prüfbedingungen bestätigen.

2. Verfahren nach Anspruch 1, wobei die zur Hash-Berechnung verwendete Transformationsregel Bestandteil der gespeicherten Metadaten ist.

3. Verfahren nach einem der Ansprüche 1 oder 2, wobei die Verknüpfung zwischen dem Zertifikat und der digitalen Informationseinheit ausschließlich über den mittels der Transformationsregel erzeugten Hash-Wert erfolgt.

4. Verfahren nach einem der vorhergehenden Ansprüche, wobei externe Programme über definierte Programmschnittstellen Zertifikattypen festlegen und Metadaten zu digitalen Informationseinheiten an das verteilte Rechensystem übermitteln.

5. Verfahren nach einem der vorhergehenden Ansprüche, wobei Zertifikate für digitale Informationseinheiten manuell, teilautomatisiert oder vollautomatisiert auf Grundlage der gespeicherten Metadaten durch externe Systeme erstellt werden.

6. Verfahren nach einem der vorhergehenden Ansprüche, wobei das ausgestellte Zertifikat Angaben umfasst, die Informationen über zulässige Verarbeitungsarten, Verwendungszwecke oder geografische Einschränkungen der digitalen Informationseinheit enthalten.

7. Verfahren nach einem der vorhergehenden Ansprüche, wobei das Zertifikat Bedingungen für die Ausführung von Programmen oder Prozessen festlegt, die mit der digitalen Informationseinheit arbeiten.

8. Verfahren nach einem der vorhergehenden Ansprüche, wobei ein Widerruf eines Zertifikats durch ein externes System über eine definierte Schnittstelle initiiert und auf Grundlage eines Konsensmechanismus innerhalb des verteilten Rechensystems bestätigt wird.

9. Verfahren nach einem der vorhergehenden Ansprüche, wobei das verteilte Rechensystem von mehreren unabhängigen Betreibern gemeinsam verwaltet wird, die über Änderungen an gespeicherten Daten durch Mehrheitsentscheidung bestimmen.

10. Verfahren nach einem der vorhergehenden Ansprüche, wobei ein externes System eine Prüfung einzelner Zertifikatsangaben durchführt, ohne die vollständigen Angaben offenzulegen, wobei ein kryptografisches Nachweisverfahren eingesetzt wird, das mathematisch überprüfbare Beweise erzeugt, die bestätigen, dass bestimmte Prüfbedingungen erfüllt sind, ohne die zugrundeliegenden Daten offenlegen zu müssen.

11. Verfahren nach einem der vorhergehenden Ansprüche, wobei die Struktur eines Zertifikats anhand eines zugehörigen, im Rechensystem gespeicherten Zertifikattyps geprüft wird, um sicherzustellen, dass die verwendete Zertifikatsstruktur gültig und unverändert ist.

12. Verfahren nach einem der vorhergehenden Ansprüche, wobei der Zugriff auf die im Rechensystem gespeicherten Zertifikattypen und Metadaten über ein verteiltes Protokoll erfolgt, das durch kryptografische Prüfsummen und Konsensregeln gegen unautorisierte Veränderungen geschützt ist.

13. Systemanordnung zur Verifizierung der Herkunft und Ursprünglichkeit sowie zur kontrollierten Verarbeitung von reproduzierbaren digitalen Informationseinheiten, umfassend:
- eine Einheit zum Ermitteln eines Hash-Werts einer digitalen Informationseinheit durch Anwendung einer definierten Transformationsregel, die die Informationseinheit in eine einheitlich strukturierte und hash-berechenbare Darstellung überführt,
- eine Einheit zum Speichern des Hash-Werts und zugehöriger Metadaten in einem verteilten Rechensystem, wobei durch kryptografische Verfahren eine nachträgliche Veränderung der gespeicherten Daten verhindert wird,
- eine Einheit zum Festlegen eines Zertifikattyps mit einer oder mehreren Zertifikatsangaben, wobei die Festlegung dauerhaft im verteilten Rechensystem gespeichert wird,
- eine Einheit zum Verknüpfen eines ausgestellten Zertifikats mit dem Hash-Wert der digitalen Informationseinheit, und
- eine Einheit zum Prüfen einer Herkunft, Ursprünglichkeit und Verarbeitungserlaubnis durch selektives Offenlegen einzelner Zertifikatsangaben gegenüber einem externen Prüfsystem, wobei ein kryptografisches Nachweisverfahren verwendet wird, das auf dem Prinzip basiert, dass der Nachweis der Gültigkeit einer bestimmten Information erfolgt, ohne deren tatsächlichen Inhalt preiszugeben, indem mathematisch überprüfbare Beweise erzeugt werden, welche lediglich die Erfüllung der Prüfbedingungen bestätigen.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
